# FASCICULE DE BREVET EUROPEEN

(11) **EP 0 778 169 B1**
(45) Date de publication et mention de la délivrance du brevet: **23.02.2000**
(21) Numéro de dépôt: 96402655.3
(22) Date de dépôt: 06.12.1996
(51) Int. Cl.: B60J 7/06

(54) **Dipositif pour le bâchage de véhicules poids lourd**
Lastkraftwagen-Planenabdeckungs-Vorrichtung
Tarpaulin arrangement for lorries

(30) Priorité: 08.12.1995 FR 9514575
(43) Date de publication de la demande: 11.06.1997
(73) Titulaire: POMMIER & CIE, 95310 Saint Ouen L'Aumone (FR)
(72) Inventeur: Froissard, Alain, 95110 Sannois (FR)
(74) Mandataire: Coester, Jacques Charles

(56) Documents cités:
- BE-A- 8 800 494
- DE-A- 2 436 794
- DE-U- 8 709 759
- DE-U- 9 404 447

## Description

La présente invention concerne le bâchage de véhicules poids lourd tels que des camions, remorques, semi-remorques et analogues et plus particulièrement un dispositif pour la manoeuvre de la bâche faisant que celle-ci s'étende sur le dessus du véhicule ou soit repliée pour en permettre un accès par le toit.

Le dispositif de l'invention permet, le cas échéant, le démontage rapide de la bâche par des moyens simples.

De même, le dispositif de l'invention met en oeuvre des moyens de pliage qui sont individuellement réparables ou interchangeables pour permettre leur remplacement en cas de défectuosités sans qu'il soit nécessaire de démonter la bâche. De façon préférée, une réparation peut être effectuée sans outil depuis le dessous de la bâche.

Le pliage réalisé selon l'invention est du type en accordéon, les plis étant constamment formés de façon régulière en cours de pliage et étant maintenus pour présenter sensiblement la forme d'une sinusoïdale de grande amplitude faisant que la bâche n'occupe qu'une faible surface en position pliée.

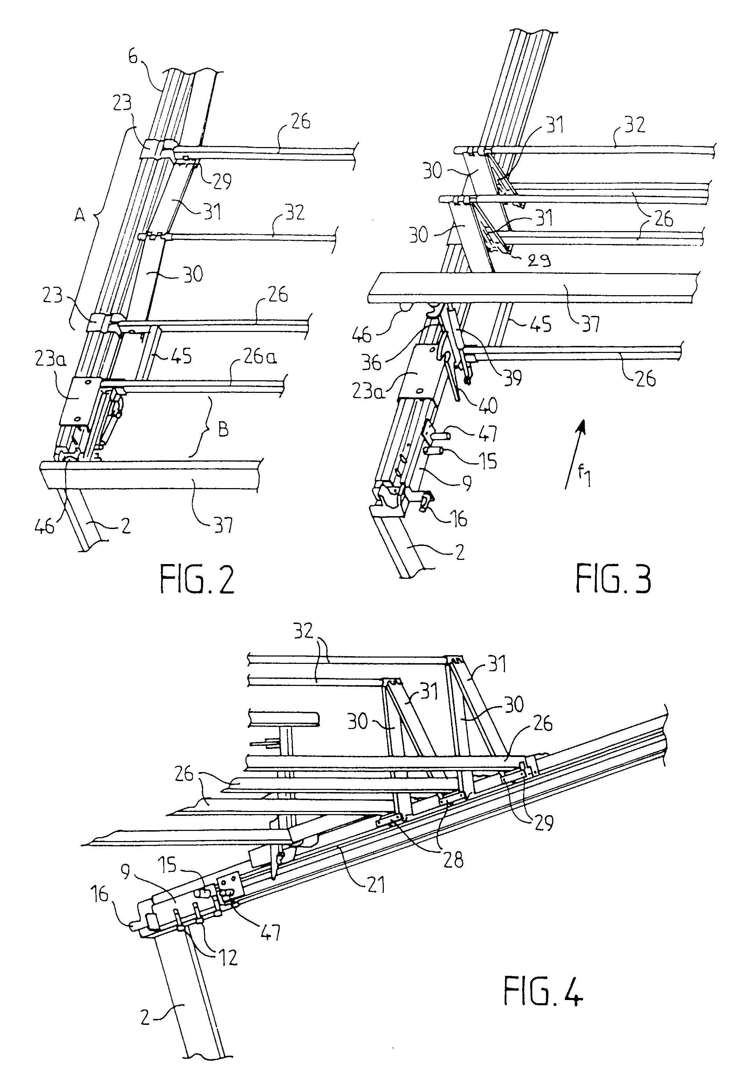

On connaît cependant par le document BE-A-8 800 494 un dispositif pour le bâchage de véhicule poids lourd dans lequel une bâche (3) est tendue entre des chariots (11, 13, 21, 7) roulant sur des longerons parallèles (1), chariots qui sont reliés deux à deux par des traverses (23), les chariots forment latéralement des pattes (voir fig. 3, 4, 5) supportant des axes d'articulation (7) d'une extrémité de platines (5, 6) qui sont articulées entre elles à leur extrémité par des arceaux transversaux (9) de support de la bâche et de manière que les jeux de platines successives (5, 6) forment un V permanent, des moyens (voir fig. 3) étant prévus pour prévenir l'alignement desdites platines successives.

Les caractéristiques de l'invention résultent des revendications annexées.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une perspective schématique à petite échelle d'un semi-remorque comportant le dispositif de bâchage selon l'invention.

La fig. 2 est une perspective partielle de la partie arrière gauche du dispositif de bâchage lorsque la bâche est en position tendue.

La fig. 3 est une perspective partielle analogue à la fig. 2 illustrant le dispositif de bâchage en position de repliage de la bâche vers l'avant de la semi-remorque selon la fig. 1.

La fig. 4 est une perspective correspondant à la fig. 3 mais montrant le dispositif de bâchage depuis le dessous.

La fig. 5 est une perspective très agrandie d'une pièce de support d'un des longerons que comporte le dispositif de bâchage des figures précédentes.

La fig. 6 est une perspective agrandie de la partie de la fig. 2 comprise dans l'accolade A.

La fig. 7 est une perspective agrandie correspondant à la fig. 6 mais illustrant une position particulière du dispositif selon la fig. 6.

La fig. 8 est une coupe, à plus grande échelle, vue selon la ligne VIII-VIII de la fig. 6.

La fig. 9 est une perspective agrandie de la partie du dispositif visible à la fig. 2 selon l'accolade B.

La fig. 10 est une élévation partielle de la partie du dispositif visible à la fig. 9.

La fig. 11 est une perspective de trois-quarts dessus correspondant à la fig. 9.

La fig. 12 est une élévation, à plus grande échelle, vue suivant la ligne XII-XII de la fig. 11.

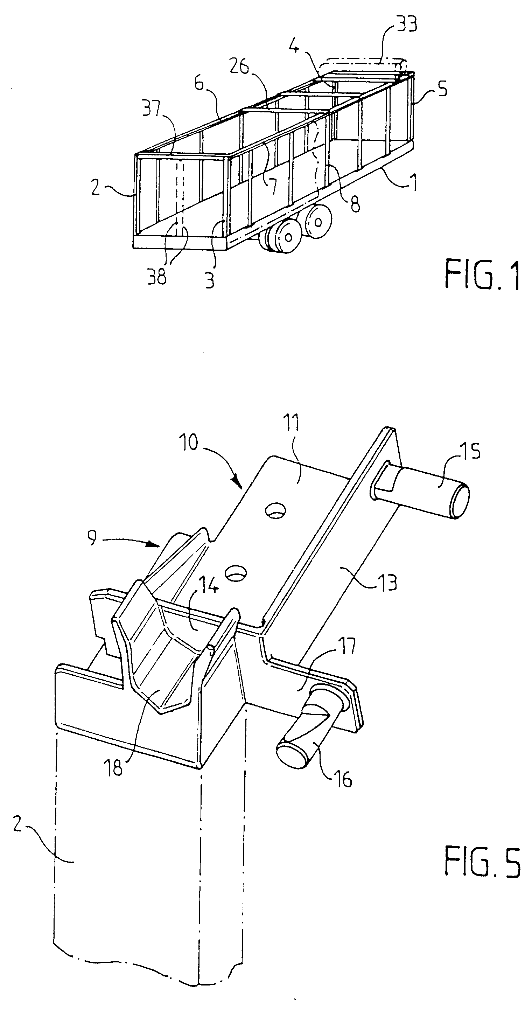

La fig. 1 illustre une semi-remorque d'un véhicule poids lourd qui comporte un plateau 1 supportant des poteaux arrière 2, 3 et avant 4, 5 au sommet desquels s'étendent des longerons 6, 7. Des montants intermédiaires 8 sont également prévus pour empêcher que les longerons 6, 7 prennent de la flèche.

Il est avantageux que les montants intermédiaires 8 soient montés de façon amovible comme cela est enseigné dans la technique.

L'objet de l'invention ne concernant pas la disposition des montants intermédiaires, leur moyen de liaison aux longerons 6, 7 et au plateau 1 n'est pas décrit.

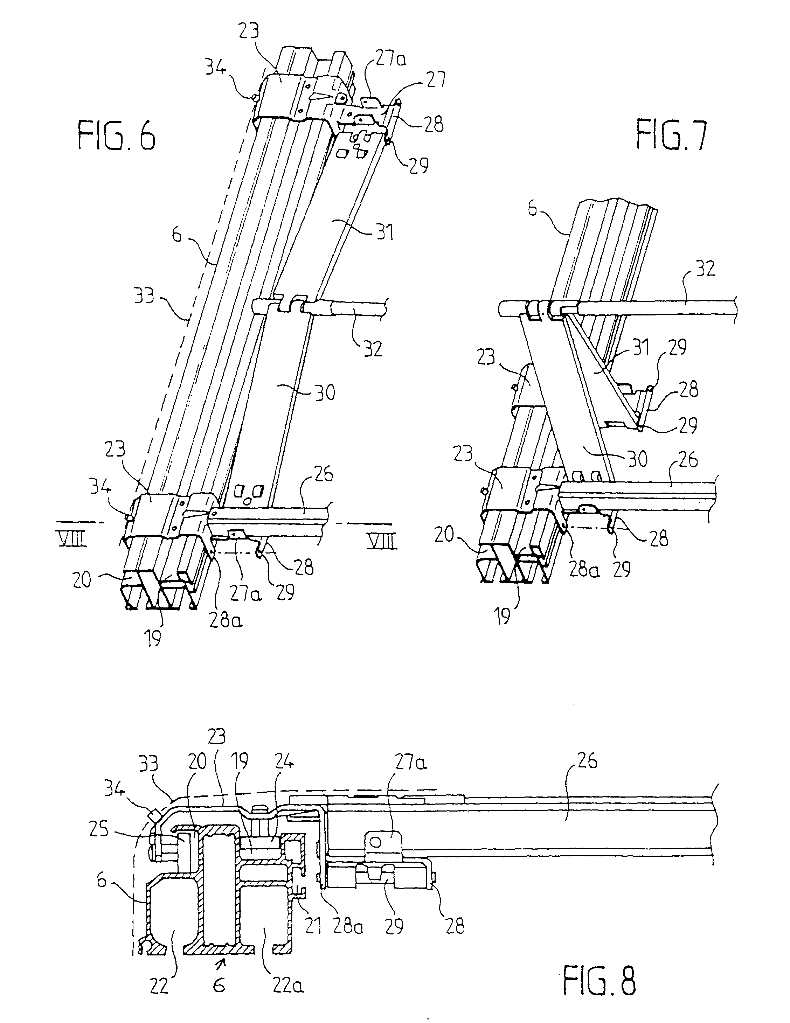

Les longerons 6, 7 sont constitués par des profilés extrudés qui sont portés à leurs extrémités par les poteaux 2 et 4, d'une part, et par les poteaux 3 et 5, d'autre part. Les longerons 6 et 7 sont soit soudés directement aux poteaux 2, 4 et 3, 5, soit de préférence munis à leur sommet d'une pièce de liaison 9 (fig. 5) qui, de son côté, est soudée à chaque poteau ou reliée par un autre moyen, par exemple par emboîtement et vissage.

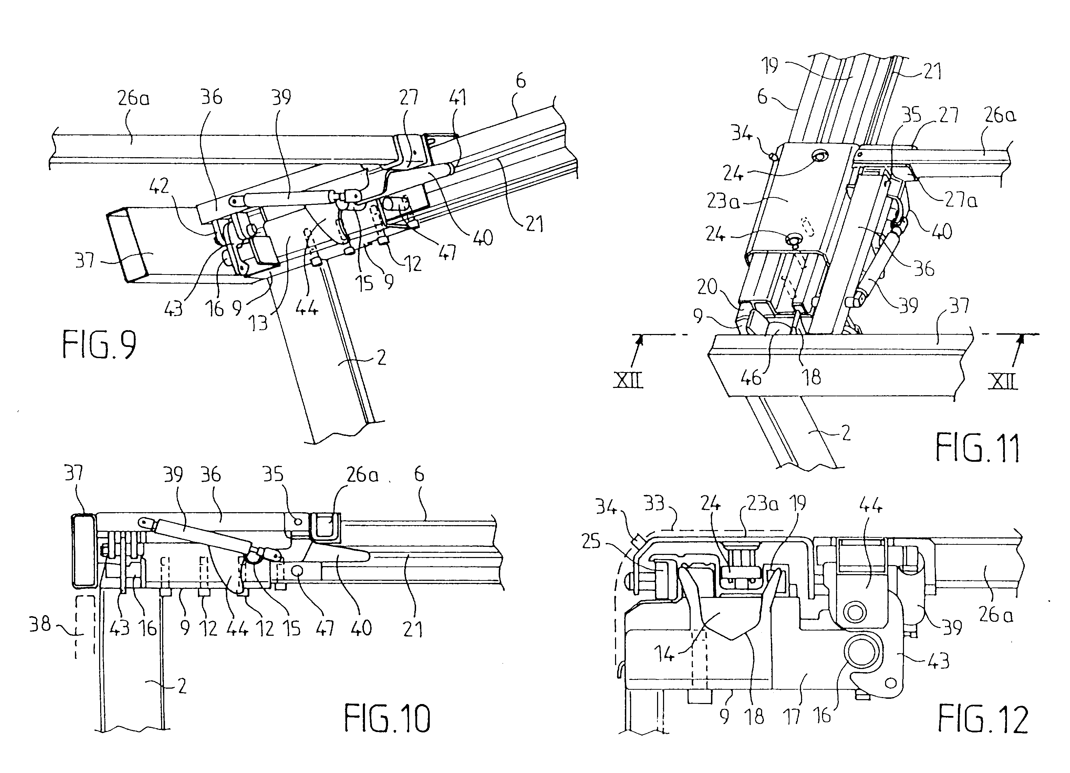

La pièce de liaison 9 est réalisée de préférence par une pièce moulée pour délimiter un berceau 10 recevant une extrémité des longerons 6 ou 7. Les longerons reposent sur le fond 11 du berceau et y sont fixés par des vis 12 bien visibles notamment aux fig. 9 et 10.

Un côté latéral 13 du berceau sert au maintien latéral du longeron correspondant qui est en butée contre un côté transversal 14.

L'utilisation de pièces 9 pour fixer les longerons permet le démontage éventuel de ces derniers et leur remplacement ou leur réparation.

A la fig. 5, le côté latéral 13 supporte, à l'extérieur du berceau 10, une butée d'arrêt 15 dont la fonction est décrite dans ce qui suit ainsi qu'une gâche 16 faisant saillie à partie d'une patte 17 prolongeant le côté transversal 14 du berceau.

La pièce 9 comporte, au-delà du berceau 10, une gouttière 18 à bords évasés qui intercepte partiellement le côté transversal 14 du berceau 10.

Les pièces 9 dont sont munis les poteaux arrière 2, 3 sont rigoureusement symétriques tandis que les pièces 9 supportées par les poteaux avant 4, 5 peuvent ne pas comporter la gouttière 18 ni les butée 15 et gâche 16.

Ainsi que l'illustre plus particulièrement la fig. 8, les longerons délimitent sur le dessus une rainure de guidage 19 de section rectangulaire ouvrant vers le haut ainsi qu'une rainure latérale 20 également de section sensiblement rectangulaire mais ouvrant sur le côté vers l'extérieur du longeron. Le fond de la rainure 19 est sensiblement de niveau avec le dessus du côté transversal 14 du berceau 10 pour permettre un accès à cette rainure à partir de la gouttière 18.

Une rainure latérale interne 21 est également prévue pour ouvrir à l'opposé de la rainure 20, cette rainure étant destinée à la mise en place d'accessoires dont certains sont décrits dans ce qui suit.

Des rainures inférieures 22, 22a sont également prévues comme l'illustre la fig. 8 mais elles ne sont pas décrites plus en détail étant donné que leur fonction n'est pas directement concernée par l'invention.

Les longerons 6 et 7 supportent des chariots 23 constitués par une ferrure sensiblement en U qui est munie d'un galet de guidage horizontal 24 et d'un galet porteur vertical 25 respectivement engagés dans les rainures 19 et 20. La position du côté transversal 14 par rapport à la gouttière 18 permet l'introduction des galets 24 par l'extrémité dans la rainure 19 comme l'illustre la fig. 12.

Deux chariots 23 se faisant face, supportés par les longerons 6, 7, sont à chaque fois réunis par une traverse 26 à laquelle ils sont reliés rigidement par un berceau 27 prolongeant la partie basse dirigée vers l'intérieur de la ferrure en U de chaque chariot 23. De préférence les traverses 26 sont amovibles par coulissement de leurs extrémités formant articulation.

De ce fait, les chariots 23 peuvent rouler librement sur les longerons 6, 7 qui forment des rails de support et de guidage sans qu'il existe aucun frottement.

Les berceaux 27 emboîtent le côté inférieur des traverses 26 et sont fixés à ces dernières par des pattes 27a (fig. 6). D'autres pattes 28 servent au support d'axes 29 (fig. 4 et 6 à 8) sur lesquels sont articulées une extrémité de platines 30 et 31 s'étendant ainsi entre deux traverses successives 26. Les axes 29 sont également supportés à leur extrémité libre par des pattes 28a (fig. 6 à 8) formées dans le côté latéral interne des chariots 23. Les axes 29 sont avantageusement maintenus par un clip ou un jonc pour pouvoir être démontés sans l'aide d'outil. Il est aussi possible de prévoir une partie amincie dans les axes 29 qui sont ainsi retenus par la patte 27a agissant comme un ressort de maintien.

Les platines 30, 31 de chaque jeu de deux platines sont articulées à leur extrémité libre sur un arceau transversal 32 supportant la bâche et qui dépasse légèrement à l'extérieur des platines pour venir prendre appui en fin de course contre le dessus des longerons 6, 7 en limitant par suite ainsi l'écartement que peuvent prendre les chariots 23 consécutifs et en faisant que deux platines d'un même jeu ne peuvent pas être alignées.

De ce fait, les platines 30, 31 constitutives de chaque jeu de platines conservent toujours une pente en constituant une sorte de V ouvert mais qui ne peut pas être inversée.

L'épaisseur des platines et les dimensions, notamment le diamètre des arceaux transversaux 32, sont choisies pour s'étendre dans un même plan sensiblement horizontal que le dessus des chariots 23 et des traverses 26 lorsque lesdits arceaux transversaux viennent en butée sur le dessus des longerons 6, 7.

La position des axes 29 sur lesquels pivote la base des platines 30, 31 est choisie de façon que ces platines forment un V très fermé lorsque deux chariots consécutifs 23 viennent en contact l'un avec l'autre ainsi que l'illustrent les fig. 3 et 7.

Le nombre de jeux de platines 30, 31 et d'arceaux transversaux 32 dépend de la longueur du véhicule devant être bâché.

Il est remarquable de constater que les platines 30, 31 étant articulées sur le côté intérieur des longerons 6, 7 qui supportent les chariots 23, il en résulte qu'en cas de bris d'une platine ou d'un axe 29 le changement est facile à exécuter depuis l'intérieur du véhicule sans qu'il y ait à démonter la bâche qui le recouvre. Cela est encore facilité par des axes 29 démontables sans outil puisqu'il devient possible de changer un jeu de platines 30, 31 en cas ce rupture de l'une d'elles.

Pour fixer la bâche schématisée en 33 à la fig. 6, il est prévu des tétons 34 sur le coté latéral externe des chariots 23, ces tétons étant engagés dans des oeillets de la bâche 33 comme le montre la fig. 8.

Etant donné que les arceaux transversaux 32 ne s'étendent que d'une faible mesure au-dessus des longerons 6, 7, la bâche 33 ne peut pas échapper desdits arceaux pendant le mouvement de pivotement des platines 30, 31 alors qu'elle est pliée en accordéon.

Pour permettre un accès à toute la surface du plateau 1 du véhicule, la dernière traverse 26a est montée sur un chariot 23a porté par chaque longeron 6 et 7 mais qui présente de préférence une longueur double de celle des chariots 23, ce que montre en particulier la fig. 2.

Chaque chariot 23a comporte ainsi deux galets de guidage 24 et deux galets de roulement 25 bien qu'un seul de ces derniers soit visible à la fig. 12 ; la fig. 11 montre cependant les deux axes de rotation.

Le berceau 27 de chaque chariot 23a forme, à partir de ses pattes 27a, une articulation 35 pour un bras 36 (fig. 9, 10 et 11) auquel est fixée une traverse 37 de fermeture devant s'étendre à l'arrière du véhicule comme l'illustrent les fig. 1, 2 et 9 à 11 pour se trouver au-dessus de portes 38 (fig. 1) destinées à fermer l'arrière du véhicule (fig. 1 et 10).

Un vérin 39, de préférence un vérin du type à gaz, est interposé entre chaque bras 36 et le chariot 23a correspondant pour équilibrer au moins partiellement, le poids de la traverse 37. En outre, chaque bras 36 supporte un levier 40 présentant sensiblement la forme d'un T renversé, ce levier 40 délimite une came 44 en forme d'aileron destinée à prendre appui contre la butée d'arrêt 15 (fig. 9) au moment de la fermeture de la bâche.

Le dessous de chaque bras 36 comporte supplémentairement une chape 42 d'articulation d'un verrou pivotant 43 destiné à coopérer avec la gâche 16 faisant partie de la pièce 9 décrite précédemment.

Il est avantageux, supplémentairement, de relier la dernière traverse 26a à la traverse 26 contiguë au moyen d'une barre de liaison 45 (fig. 2), ce qui a pour effet que les traverses 26, 26a constituent un cadre rigide et par suite très stable sur les longerons 6, 7.

Outre ce qui précède, la traverse 37 est munie, sur sa face interne et sur chacun de ses deux côtés, d'un plot 46 correspondant à la gouttière 18 à bords évasés.

Lorsqu'on désire plier la bâche du véhicule, les verrous 43 (fig. 9 et 12) sont dégagés, ce qui permet le soulèvement de la traverse 37 et le pivotement des bras 36 qui la portent, ces bras étant poussés par les vérins à gaz 39 auxquels elles sont reliées.

Les bras et la traverse sont de cette manière amenés de la position illustrée aux fig. 9 à 11 à celle illustrée par la fig. 3 pour laquelle la traverse 37 s'étend au-dessus des rails tout en étant maintenue dans la position illustrée par les vérins 39.

Le cadre formé par les chariots 23, 23a reliés par les barres de liaison 45 est ensuite poussé dans le sens de la flèche f₁ (fig. 3), ce qui a pour effet d'assurer successivement le soulèvement des jeux de platines 30, 31 qui forment entre elles un V de plus en plus fermé.

La bâche est ainsi pliée en accordéon par les arceaux transversaux 26 puisqu'elle est maintenue par ailleurs de part et d'autre de ceux-ci par les tétons 34.

Lorsque la bâche est pliée comme silhouetté à la fig. 1 à l'avant du véhicule la traverse 37 se trouve également proche de l'avant du véhicule, de sorte qu'elle ne constitue plus une gêne pour la manutention des objets pouvant être chargés ou déchargés du plateau 1.

Lorsqu'il y a lieu de refermer la bâche, les chariots 23a et 23 sont déplacés vers l'arrière du véhicule.

En fin de course, le levier 40 délimitant la came en forme d'aileron 44 qui était en position sensiblement verticale comme montré par la fig. 3 heurte une butée 47 mise en place par serrage dans la rainure 21 des longerons (fig. 3 et 9), ce qui fait basculer les bras 36 et amène la came en forme d'aileron 44 à envelopper la butée d'arrêt 15 de la pièce 9 pour tendre la bâche sous l'action des vérins 39 qui se rétractent. La butée 47 est placée en avant du côté latéral 13 de la pièce 9 de façon à ne pas pouvoir être éjectée du longeron qui la porte afin d'empêcher une extraction accidentelle du dispositif de bâchage. En effet, la butée 47 doit nécessairement être démontée tant pour permettre l'introduction des galets 24 des chariots que leur retrait des rails 19.

En fin de course les plots 46 portés par la traverse 37 sont guidés dans la gouttière 18 à bords évasés pour venir finalement dans le fond de cette gouttière en même temps que le verrou 43 est refermé sur la gâche 16.

L'invention n'est pas limitée à l'exemple de réalisation représenté et décrit en détail, car diverses modifications peuvent y être apportées. En particulier, il est possible de prévoir une traverse de fermeture avant analogue à la traverse de fermeture arrière 37 pour permettre le pliage de la bâche dans un sens ou dans l'autre.

## Revendications

1. Dispositif pour le bâchage de véhicule poids-lourd dans lequel une bâche est tendue entre des chariots (23, 23a) roulant sur des longerons parallèles (6, 7), chariots (23, 23a) qui sont reliés deux à deux par des traverses (26), les chariots (23) formant latéralement des pattes (28, 28A) supportant des axes d'articulation (29) d'une extrémité de platines (30, 31) qui sont articulées entre elles à leur extrémité par des arceaux transversaux (32) de support de la bâche et de manière que les jeux de platines successives (30, 31) forment un V permanent, des moyens étant prévus pour prévenir l'alignement desdites platines successives (30, 31), caractérisé en ce que les chariots (23, 23a) maintiennent l'écartement des longerons (6, 7) et en ce que les moyens pour prévenir l'alignement des platines (30, 31) successives sont constitués par les arceaux (32) faisant saillie au-delà des platines (30, 31) pour prendre appui contre les longerons (6, 7) en position d'ouverture maximale du V qu'elles forment.

2. Dispositif suivant la revendication 1, caractérisé en ce que les platines (30, 31) sont articulées à une extrémité sur des axes démontables (29) disposés à la base des traverses (26).

3. Dispositif suivant l'une des revendications 1 ou 2, caractérisé en ce que les chariots (23, 23a) sont reliés rigidement aux traverses (26), sont disposés à l'extérieur desdites platines (30, 31) et font saillie au-dessus des longerons d'une mesure correspondant sensiblement à l'épaisseur de l'arceau transversal (32) reliant chaque jeu de platines (30, 31).

4. Dispositif suivant l'une des revendications 1 à 3, caractérisé en ce que les chariots (23, 23a) sont munis sur leur côté extérieur de tétons (34) pour la fixation de la bâche (33).

5. Dispositif suivant l'une des revendications 1 à 4, caractérisé en ce que les chariots (23a) de la dernière traverse (26a) sont reliés par des bras articulés (36) à une traverse arrière de fermeture (37).

6. Dispositif suivant la revendication 5, caractérisé en ce que les bras articulés (36) sont reliés à des vérins d'équilibrage (39).

7. Dispositif suivant l'une des revendications 5 et 6, caractérisé en ce que les bras articulés (36) comportent un levier (40) délimitant une came (44) en forme d'aileron, une butée (47) amenant la came (44) en forme d'aileron contre une butée d'arrêt (15) en provoquant la tension de la bâche en position de fermeture de celle-ci.

8. Dispositif suivant la revendication 7, caractérisé en ce que la butée (47) est réglable dans une rainure latérale (21) et est placée en avant d'une pièce de liaison (9) de support des longerons (6, 7) et dont le côté latéral (13) empêche son éjection éventuelle.

9. Dispositif suivant l'une des revendications 5 à 8, caractérisé en ce que les bras articulés (36) comportent des verrous (43) pour le verrouillage de la traverse arrière de fermeture (37) lorsque la bâche (33) est tendue.

10. Dispositif suivant l'une des revendications 1 à 9, caractérisé en ce que la traverse arrière (26a) portée par les chariots (23a) est reliée par des barres (45) à la traverse (26) qui la précède pour former un cadre rigide.

11. Dispositif suivant l'une des revendications 1 à 10, caractérisé en ce que les chariots (23, 23a) sont supportés par des galets de roulement (25) disposés verticalement dans une rainure latérale (20) des longerons formant des rails, lesdits chariots étant munis de galets (24) de guidage horizontaux disposés dans une rainure de guidage (19) ouvrant vers le haut.

12. Dispositif suivant la revendication 8, caractérisé en ce que les longerons (6, 7) sont reliés au moins à leur partie arrière à des montants (2, 3) par la pièce de liaison (9) délimitant un berceau (10) dans le fond duquel les longerons sont vissés.

13. Dispositif suivant la revendication 8, caractérisé en ce que la pièce de liaison (9) comporte en extrémité une gouttière (18) à bords évasés pour le logement de plots (46) que comporte la traverse arrière de fermeture (37).

14. Dispositif suivant la revendication 8, caractérisé en ce que la pièce de liaison (9) comporte une gouttière (18) située en face de la rainure (19) de chaque rail (6) pour la mise en place respectivement le retrait des chariots (23) liés deux à deux par chaque traverse (26).

15. Dispositif selon la revendication 2, caractérisé en ce que le caractère démontable des axes (29) est obtenu sans l'aide d'outil, ces axes présentant de préférence une partie amincie permettant leur retenue.

## Patentansprüche

1. Vorrichtung zur Planenabdeckung von Lastkraftwagen, bei welcher eine Wagenplane zwischen auf parallellen Längsträgern (6,7) fahrenden Schlitten (23, 23a) gespannt ist, welche Schlitten (23, 23a) paarweise durch Querträger (26) verbunden sind, wobei die Schlitten (23) seitwärts Ansatzlager (28, 28A) bilden, die die Gelenkzapfen (29) eines Endes von Leisten (30, 31) tragen, welche an ihrem Ende durch die Wagenplane tragenden Querspriegel (32) derart miteinander angelenkt sind, daß die Sätze von aufeinanderfolgenden Leisten (30, 31) ein ständiges V bilden, wobei Mittel vorgesehen sind, um die fluchtende Ausrichtung der besagten aufeinanderfolgenden Leisten (30, 31) zu verhindern, dadurch gekennzeichnet, daß die Schlitten (23, 23a) den Abstand zwischen den Querträgern (6, 7) aufrechterhalten und daß die Mittel zum Verhindern der fluchtenden Ausrichtung der aufeinanderfolgenden Leisten (30, 31) durch die Spriegel (32) gebildet werden, die jenseits der Leisten (30, 31) vorspringen, um sich an den Querträgern (6, 7) in der Stellung der größten Öffnung des V's, die sie bilden, abzustützen.

2. Vorrichtung gemäß Anspruch 1, dadurch gekennzeichnet, daß die Leisten (30, 31) mit einem Ende an an dem Unterteil der Querträger (26) angeordneten abnehmbaren Zapfen (29) angelenkt sind.

3. Vorrichtung gemäß einem der Ansprüche 1 oder 2, dadurch gekennzeichnet, daß die Schlitten (23, 23a) mit den Querträgern (26) starr verbunden sind, außerhalb der besagten Leisten (30, 31) angeordnet sind und oberhalb der Längsträger in einem etwa der Dicke des jeden Satz von Leisten (30, 31) verbindenden Querspriegels (32) entsprechenden Maß hervorragen.

4. Vorrichtung gemäß einem der Ansprüche 1 bis 3, dadurch gekennzeichnet, daß die Schlitten ( 23, 23a) an ihrer Außenseite mit Ansatzzapfen (34) für die Befestigung der Wagenplane (33) versehen sind.

5. Vorrichtung nach einem der Ansprüche 1 bis 4, dadurch gekennzeichnet, daß die Schlitten (23a) des letzten Querträgers ( 26a) durch an einem hinteren Verschlußquerträger (37) angelenkte Arme (36) verbunden sind.

6. Vorrichtung gemäß Anspruch 5, dadurch gekennzeichnet, daß die angelenkten Arme( 36) mit Kraftzylindern (39) verbunden sind.

7. Vorrichtung gemäß einem der Ansprüche 5 und 6, dadurch gekennzeichnet, daß die angelenkten Arme (36) einen einen flügelförmigen Nocken (44) abgrenzenden Hebel (40) aufweisen, wobei ein Anschlag (47) den flügelförmigen Nocken (44) an einen Arretieranschlag (15) bringt, unter Verursachung der Spannung der Wagenplane in der verschließenden Abdeckstellung derselben.

8. Vorrichtung gemäß Anspruch 7, dadurch gekennzeichnet, daß der Anschlag (47) in einer Seitennut (21) einstellbar ist und vor einem Verbindungstück (9) zur Halterung der Längsträger (6, 7) gelegen ist und dessen seitliche Seite (13) dessen etwaigen Auswurf verhindert.

9. Vorrichtung gemäß einem der Ansprüche 5 bis 8, dadurch gekennzeichnet, daß die angelenkten Arme (36) Riegel (43) zur Verriegelung des hinteren Verschlußlauerträgers (37), wenn die Wagenplane (33) gespannt ist, aufweisen.

10. Vorrichtung gemäß einem der Ansprüche 1 bis 9, dadurch gekennzeichnet, daß der durch die Schlitten (23a) hintere Querträger (26a) mit dem vorangehenden Querträger (26) durch Stangen (45) verbunden ist, um einen steifen Rahmen zu bilden.

11. Vorrichtung gemäß einem der Ansprüche 1 bis 10, dadurch gekennzeichnet, daß die Schlitten (23, 23a) durch senkrecht in einer Schienen bildenden Seitennut (20) der Längsträger angeordnete Fahrollen (25) getragen werden, wobei die besagten Schlitten mit in einer nach oben ausmündenden Führunsgnut (19) angeordneten waagerechten Führungsrollen (24) versehen sind.

12. Vorrichtung gemäß Anspruch 8, dadurch gekennzeichnet, daß die Längsträger (6, 7) wenigstens mit an ihrem hinterem Teil mit Pfosten (2,3) durch das Verbindungstück (9) verbunden sind, welches einen Sattel (10) abgrenzt, an dessen Boden die Längsträger angeschraubt sind.

13. Vorrichtung gemäß Anspruch 8, dadurch gekennzeichnet, daß das Verbindungstück (9) am Ende eine Rinne (18) mit aufgeweiteten Rändern zur Unterbringung von Ansatztstiften (46), die der hintere Verschlußquerträger (37) aufweist, umfaßt.

14. Vorrichtung gemäß Anspruch 8, dadurch gekennzeichnet, daß das Verbindungstück (9) eine gegenüber der Nut (19) jeder Schiene (6) gelegene Rinne (18) aufweist, zum Instellungbringen bzw. Abnehmen der paarweise durch jeden Querträger (26) verbundenen Schlitten (23).

15. Vorrichtung gemäß Anspruch 2, dadurch gekennzeichnet, daß die Abnehmbarkeit der Zapfen (29) ohne Hilfe eines Werkzeuges erzielt wird, wobei diese Zapfen vorzugsweise einen ihr Zurückhalten gestattenden verdünnten Teil aufweisen.

## Claims

1. Tarpaulin arrangement for heavy road vehicles in which a tarpaulin is stretched between a set of carriages (23, 23a) rotating on parallel longitudinal girders (6, 7), which carriages (23, 23a) are connected two by two by means of cross-members (26), the carriages (23) laterally forming a set of lugs (28, 28A) that support articulation pins (29) for one end of platens (30, 31) which are articulated together at their end by means of transverse arch members (32) for supporting the tarpaulin and so that the sets of successive platens (30, 31) form a permanent V, means being provided for preventing the alignment of said successive platens (30, 31), characterized in that the carriages (23, 23a) maintain the distance between the longitudinal girders (6, 7) and in that the means for preventing the alignment of the sucessive platens (30, 31) are constituted by the arch members (32) that protrude beyond the platens (30, 31) for bearing on the longitudinal girders (6, 7) in the maximal opening position of the V that they form.

2. Arrangement according to claim 1, characterized in that the platens (30, 31) are articulated at one end on disassemblable pins (29) arranged at the base of the cross-members (26).

3. Arrangement according to one of claims 1 or 2, characterized in that the carriages (23, 23a) are rigidly connected to the cross-members (26), are arranged at the outside of said platens (30, 31), and are protruding above the longitudinal girders by a measure corresponding substantially to thickness of the transverse arch member (32) connecting each set of platens (30, 31).

4. Arrangement according to one of claims 1 to 3, characterized in that the carriages (23, 23a) are provided, on their outer side, with teats (34) for fixing the tarpaulin (33).

5. Arrangement according to one of claims 1 to 4, characterized in that the carriages (23a) of the last cross-member (26a) are connected by means of articulated arms (36) to a closing rear cross-member (37).

6. Arrangement according to claim 5, characterized in that the articulated arms (36) are connected to balancing actuators (39).

7. Arrangement according to one of claims 5 and 6, characterized in that the articulated arms (36) comprise a lever (40) that defines a fin shaped cam (44), an abutment (47) bringing the fin shaped cam (44) against a stopping abutment (15) by stretching the tarpaulin in the closing position thereof.

8. Arrangement according to claim 7, characterized in that the abutment (47) is adjustable in a lateral groove (21) and is placed in front of a connecting piece (9) for supporting the longitudinal girders (6, 7) and the lateral side of which prevents its possible ejection.

9. Arrangement according to one of claims 5 to 8, characterized in that the articulated arms (36) comprise a set of bolts (43) for the locking of the closing rear cross-member (37) when the tarpaulin (33) is stretched.

10. Arrangement according to one of claims 1 to 9, characterized in that the rear cross-member (26a) carried by the carriages (23a) is connected by means of bars (45) to the cross-member (26) that precedes it for forming a rigid frame.

11. Arrangement according to one of claims 1 to 10, characterized in that the carriages (23, 23a) are supported by rolling rollers (25) that are vertically arranged in a lateral groove (20) of the longitudinal girders that form a set of rails, said carriages being provided with horizontal guiding rollers (24) arranged in a guiding groove (29) that opens upwardly.

12. Arrangement according to claim 8, characterized in that the longitudinal girder (6, 7) are connected, at least at the rear part thereof, to uprights (2, 3) by means of the connecting piece (9) that defines a cradle (10) in the bottom of which the longitudinal girders are screwed.

13. Arrangement according to claim 8, characterized in that the connecting piece (9) has one end comprising a gutter (18) with flared edges for the housing of studs (46) that comprises the closing rear cross-member (37).

14. Arrangement according to claim 8, characterized in that the connecting piece (9) comprises a gutter (18) opposite to the groove (19) of each rail (6) for the positioning, respectively, the withdrawal of the carriages (23) that are connected two by two by means of each cross-member (26).

15. Arrangement according to claim 2, characterized in that the disassembling operation of the pins (29) is obtained without help of any tools, these pins having preferably a thinnered part enabling to hold them.
